(19) **Europäisches Patentamt / European Patent Office / Office européen des brevets**

(11) **EP 4 672 836 A1**

(12) **EUROPEAN PATENT APPLICATION**
published in accordance with Art. 153(4) EPC

(43) Date of publication:
**31.12.2025 Bulletin 2026/01**

(21) Application number: **23923354.7**

(22) Date of filing: **23.02.2023**

(51) International Patent Classification (IPC):
**H04W 72/0446** (2023.01)

(52) Cooperative Patent Classification (CPC):
**H04W 72/0446**

(86) International application number:
**PCT/CN2023/077967**

(87) International publication number:
**WO 2024/174177 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HU, Yi**
**Dongguan, Guangdong 523860 (CN)**
• **LI, Haitao**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **COMMUNICATION METHOD AND APPARATUS, TERMINAL DEVICE, MEDIUM, CHIP, PRODUCT, AND PROGRAM**

(57) Embodiments of the present application provide a communication method and apparatus, a terminal device, a medium, a chip, a product, and a program. The method comprises: a terminal device determines a start time unit of sidelink (SL) transmission and/or a start time unit of physical uplink control channel (PUCCH) transmission.

A terminal device determines a starting time unit of an SL transmission and/or a starting time unit of a PUCCH transmission — S601

**FIG. 6**

## Description

TECHNICAL FIELD

Embodiments of the present disclosure relate to the technical field of mobile communications, and particularly, to a communication method, an apparatus, a terminal device, a medium, a chip, a product and a program.

BACKGROUND

A sidelink (SL) transmission is a transmission between terminal devices, and a physical uplink control channel (PUCCH) transmission is a transmission from a terminal device to a network device.

The SL transmission and/or the PUCCH transmission of a terminal device are/is a long-standing concern in the art.

SUMMARY

Embodiments of the present disclosure provide a communication method, an apparatus, a terminal device, a medium, a chip, a product and a program.

In a first aspect, there is provided a communication method in an embodiment of the present disclosure, the method includes the following operations.

A terminal device determines a starting time unit of an SL transmission and/or a starting time unit of a PUCCH transmission.

In a second aspect, there is provided a communication apparatus in an embodiment of the present disclosure, the apparatus includes a determination unit.

The determination unit is configured to determine a starting time unit of an SL transmission and/or a starting time unit of a PUCCH transmission.

In a third aspect, there is provided a terminal device in an embodiment of the present disclosure, the network device includes a processor and a memory.

The memory is for storing a computer program.

The processor is configured to call the computer program stored in the memory and run the computer program, to enable the terminal device to perform the method described in the first aspect.

In a fourth aspect, there is provided a computer storage medium in an embodiment of the present disclosure, the computer storage medium stores one or more programs executable by one or more processors that, when executing the one or more programs, perform the method described in the first aspect.

In a fifth aspect, there is provided a chip in an embodiment of the present disclosure. The chip includes a processor configured to call a computer program from a memory and run the computer program, to perform the method described in the first aspect.

In a sixth aspect, there is provided a computer program product in an embodiment of the present disclosure. The computer program product includes a computer storage medium storing a computer program. The computer program includes instructions executable by at least one processor that, when executing the instructions, perform the method described in the first aspect.

In a seventh aspect, there is provided a computer program in an embodiment of the present disclosure. The computer program causes a computer to perform the method described in the first aspect.

In the embodiments of the present disclosure, the terminal device determines the starting time unit of the SL transmission and/or the starting time unit of the PUCCH transmission. In such way, firstly, the terminal device determines the starting time unit of the SL transmission and/or the starting time unit of the PUCCH transmission, and then performs the SL transmission and/or the PUCCH transmission starting from the starting time unit of the SL transmission and/or the starting time unit of the PUCCH transmission. Therefore, the SL transmission and/or the PUCCH transmission can be performed on corresponding resources, which is beneficial to improving reliability of the SL transmission and/or the PUCCH transmission.

BRIEF DESCRIPTION OF THE DRAWINGS

The accompanying drawings, which are illustrated herein, provide further understanding of the disclosure and constitute a part of this disclosure. The exemplary embodiments of the disclosure and their description are used for explaining the present disclosure and not to unduly limit the present disclosure. In the drawings:

FIG. 1 is a schematic diagram of an application scenario in an embodiment of the present disclosure.
FIG. 2 is a schematic diagram of architecture of a communication system provided in an embodiment of the present disclosure.
FIG. 3 is a schematic diagram of architecture of another communication system provided in an embodiment of the present disclosure.
FIG. 4 is a schematic diagram of a timing relationship provided in an embodiment of the present disclosure.
FIG. 5 is a schematic diagram of another timing relationship provided in an embodiment of the present disclosure.
FIG. 6 is a schematic flowchart of a communication method provided in an embodiment of the present disclosure.
FIG. 7 is a schematic structural diagram of composition of a communication apparatus provided in an embodiment of the present disclosure.
FIG. 8 is a schematic structural diagram of a terminal device provided in an embodiment of the present disclosure.
FIG. 9 is a schematic structural diagram of a chip according to an embodiment of the present disclosure.

DETAILED DESCRIPTION

The technical solutions in the embodiments of the present disclosure will be described with reference to the accompanying drawings in the embodiments of the present disclosure. It is apparent that the described embodiments are some embodiments of the present disclosure rather than all of the embodiments. All other embodiments obtained by a person of ordinary skill in the art based on the embodiments of the present disclosure without paying inventive efforts shall fall within the scope of protection of the present disclosure.

The technical solutions described in the embodiments of the present disclosure may be combined arbitrarily with each other, provided that they do not conflict with each other. In the description of the present disclosure, the term "a plurality of" means two or more, unless otherwise explicitly and specifically defined.

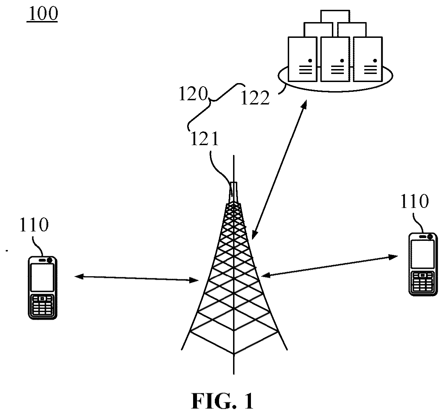

FIG. 1 is a schematic diagram of an application scenario in an embodiment of the present disclosure.

As illustrated in FIG. 1, a communication system 100 may include a terminal device 110 and a network device 120. The network device 120 may communicate with the terminal device 110 via an air interface. Multi-service transmission is supported between the terminal device 110 and the network device 120.

It should be understood that embodiments of the present disclosure are illustrated with reference to the communication system 100 only, but the embodiments of the present disclosure are not limited thereto. In other words, the technical solutions of the embodiments of the present disclosure may be applied to various communication systems, such as: a global system of mobile communication (GSM) system, a code division multiple access (CDMA) system, a wideband CDMA (WCDMA) system, a general packet radio service (GPRS), a long term evolution (LTE) system, an advanced LTE (LTE) system, a new radio (NR) system, an evolution system of NR system, an LTE-based access to unlicensed spectrum (LTE-U), an NR-based access to unlicensed spectrum (NR-U), a universal mobile telecommunications system (UMTS), a wireless local area network (WLAN), a wireless fidelity (WiFi), an LTE time division duplex (TDD) system, a universal mobile telecommunications system (UMTS), an Internet of things (IoT) system, a narrow band IoT (NB-IoT) system, a non-terrestrial network (NTN) system, an enhanced machine-type communication (eMTC) system, or a further communication system such as a 6th generation (6G) or 7th generation (7G) communication system, etc.

The network device 120 in the embodiments of the present disclosure may include an access network device 121 and/or a core network device 122. The access network device may provide communication coverage to a particular geographic area, and may communicate with the terminal device 110 (such as user equipment (UE)) located within the coverage area.

The terminal device in any of the embodiments of the present disclosure is a device with a wireless communication function, and the terminal device may be deployed on land, including indoors or outdoors, and be hand-held, wearable or vehicle-mounted; or the terminal device may also be deployed on water (such as ships, etc.), or may also be deployed in air (such as airplanes, balloons and satellites, etc.). The terminal device in any of the embodiments of the present disclosure may be referred to as UE, a mobile station (MS), a mobile terminal (MT), a subscriber unit, a subscriber station, a mobile console, a remote station, a remote terminal, a mobile device, a user terminal, a terminal, a wireless communication device, a user agent, or a user apparatus. The terminal device in any of the embodiments of the present disclosure may include one or a combination of at least two of the following devices: an IoT device, a satellite terminal, a wireless local loop (WLL) station, a personal digital assistant (PDA) , a handheld device with a wireless communication function, a computing device or another processing device connected to a wireless modem, a server, a mobile phone, a Pad, a computer with a wireless transceiver function, a handheld computer, a desktop computer, a PDA, a portable media player, a smart speaker, a navigation device, a wearable device such as a smart watch, smart glasses, a smart necklace, a pedometer, a digital television (TV), a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a vehicle, an in-vehicle device, an in-vehicle module in an Internet of vehicle, a wireless modem, a handheld device, a customer premise equipment (CPE), a smart home appliance, etc.

Optionally, the terminal device 110 may be any terminal device including but not limited to a terminal device connected to the network device 120 or other terminal devices via a wired or wireless connection.

Optionally, the terminal device 110 may be applied to a device to device (D2D) communication.

The network device 121 may include one of or a combination of at least two of the following devices: an evolutional bode B (eNB or eNodeB) in an LTE system, a next generation radio access network (NG RAN) device, a base station in an NR system (gNB), a small station, a micro station, a wireless controller in a cloud radio access network (CRAN), an access point in WiFi, a transmission reception point (TRP), a relay station, an access point, an on-board device, a wearable device, a hub, a switch, a bridge, a router, a satellite, a network device in a future evolved public land mobile network (PLMN) or the like.

The core network device 122 may be a 5th generation core (5GC) device, and the core network device 122 may include one of or a combination of at least two of: an access and mobility management function (AMF), an authentication server function (AUSF), a user plane function (UPF), a session management function (SMF), and a location management function (LMF), or a policy control function (PCF). In some other implementations, the core network device may also be an evolved packet core (EPC) device in the LTE network, for example, an SMF + core packet gateway (SMF + PGW-C) device. It should be understood that the SMF+PGW-C may achieve functions that can be achieved by both the SMF and PGW-C. In a process of network evolution, the core network network 122 may also be called by other names, or the functions of the core network may be divided to form a new network entity, which is not limited by the embodiments of the disclosure.

Various functional units in the communication system 100 may also be connected with each other through a next generation (NG) interface to realize communication.

For example, the terminal device may establish an air interface connection with the access network device through an NR interface, to send user plane data and a control plane signaling. The terminal device may establish a control plane signaling connection with an access and mobility management function (AMF) through an NG interface 1 (N1 for short). The access network device such as a next generation radio access base station (gNB) may establish a user plane data connection with a user plane function (UPF) through an NG interface 3 (N3 for short). The access network device may establish a control plane signaling connection with the AMF through an NG interface 2 (N2 for short). The UPF may establish a control plane signaling connection with a session management function (SMF) through an NG interface 4 (N4 for short). The UPF may interact user plane data with data network through an NG interface 6 (N6 for short). The AMF may establish a control plane signaling connection with the SMF through an NG interface 11 (N11 for short). The SMF may establish a control plane signaling connection with a policy control function (PCF) through an NG interface 7 (N7 for short).

FIG. 1 illustrates one base station, one core network device and two terminal devices as an example. Optionally, the wireless communication system 100 may include multiple base stations and the coverage of each base station may include other numbers of terminal devices, which is not limited in the embodiment of the disclosure.

It should be noted that FIG. 1 illustrates the system to which the disclosure is applicable by way of example only, and the methods illustrated in the embodiments of the disclosure may also be applicable to other systems. Moreover, the terms "system" and "network" are usually interchangeably used in the disclosure. The term "and/or" herein is only used to describe an association relationship between the associated objects, and represents that three relationships may exist. For example, A and/or B may represent the three conditions: independent existence of A, existence of both A and B and independent existence of B. In addition, the character "/" in the present disclosure usually represents that previous and next associated objects form an "or" relationship It should also be understood that the term "indication" mentioned in the embodiments of the disclosure may be a direct indication or an indirect indication, and may also be indicative of an associated relationship. For example, A indicates B, which may represent that A directly indicates B, for example, B may be obtained through A; or that A indirectly indicates B, for example, A indicates C, and B may be obtained through C; or that there is an association between A and B. It should also be understood that the term mentioned "correspondence" in the embodiments of the present disclosure may indicate a direct or indirect correspondence between associated objects, or indicate an association relationship between the objects, or a relationship of indicating and being indicated, configuring and being configured, etc. It should also be understood that the phrase "predefining", "defined in a protocol", "predetermining" or "predefined rule" mentioned in the embodiments of the disclosure may be implemented by pre-storing corresponding codes, or tables in devices (such as terminal devices and network devices), or by other means that may be used for indicating relevant information, the specific implementation of which is not limited in the present disclosure. For example, predefinition may mean that it is defined in the protocol. It should also be understood that, in the embodiments of the disclosure, the "protocol" may be a standard protocol in the communication field, such as an LTE protocol, an NR protocol, and related protocols to be applied in a future communication systems, which are not limited herein.

To facilitate understanding of the technical solutions in the embodiments of the present disclosure, the technical solutions in the present disclosure are described below through the detailed embodiments. The aforementioned related technologies, used as optional solutions, may be combined with the technical solutions of the embodiments of the disclosure in various ways. Such combinations shall fall within the scope of protection of the embodiments of the disclosure. The embodiments of the disclosure include at least part of the following contents.

At present, due to people's demands on a speed, latency, high-speed mobility, energy efficiency as well as diversity and complexity of services in future life, the 3rd Generation Partnership Project (3GPP) international standards organization has begun to develop 5G. The main application scenarios of 5G are: an enhanced mobile broadband (eMBB), a massive machine type communication (mMTC), and an ultra-reliable and low latency communication (URLLC).

The eMBB still aims at providing users with multimedia contents, services and data, and the demand for this scenario is growing very rapidly. On the other hand, since the eMBB may be deployed in different scenarios such as indoor, urban, rural, etc., capabilities and requirements of these scenarios vary greatly. Therefore, it is necessary to make detailed analysis combined with specific scenarios and it cannot be unconditionally defined. Typical applications of URLLC includes: industrial automation, power automation, remote medical operation (surgery), traffic safeguard, etc. Typical characteristics of mMTC includes: a high connection density, small data volume, delay-insensitive services, low cost and long service life of modules and so on.

NR may also be deployed independently. For the purpose of reducing air interface signalings, quickly resuming wireless connections, and quickly resuming data services, the 5G network environment defines a new radio resource control (RRC) state, i.e., RRC_INACTIVE state. This state is different from RRC_IDLE state and RRC_ACTIVE state.

RRC_IDLE: mobility is based on cell selection and reselection of UE, paging is initiated by the core network (CN), and a paging area is configured by the CN. There is no UE access stratum (AS) context on the base station side. No RRC connection exists.

RRC_CONNECTED (also referred to as RRC_ACTIVE): there is an RRC connection, and the UE AS context is present in the base station and the UE. The network side knows the UE location at a specific cell level. The mobility is controlled by the network side. Unicast data may be transmitted between UE and the base station.

RRC_INACTIVE: mobility is based on cell selection and reselection of UE, there is a connection between CN-NR, UE context is present in some base station, paging is triggered by a radio access network (RAN), a RAN-based paging area is managed by the RAN, and the network side knows a position of the UE at a level of RAN-based paging area.

3GPP is studying the NTN technology, the NTN technology generally provides a communication service to terrestrial users by using a satellite communication manner. Compared with a terrestrial cellular communication, the satellite communication has many unique advantages. Firstly, the satellite communication is not restricted by a region of the users. For example, the general terrestrial communication cannot cover regions such as oceans, mountains, deserts, etc., where communication devices cannot be installed or where communication coverage is not built due to sparse population. For the satellite communication, because a satellite can cover a large area of the ground, and the satellite can orbit around the earth, therefore, theoretically, every corner of the earth can be covered by the satellite communication. Secondly, the satellite communication has a great social value. The satellite communication can cover remote mountainous regions, poor and backward countries or regions at a lower cost, so that people in these regions can be provided with the advanced voice communication and mobile Internet technology, which is conducive to narrowing a digital divide with developed regions and promoting development of these regions. Thirdly, the satellite has a long-distance communication, a cost of the communication would not increase significantly when the communication distance increases. Finally, the satellite communication has a high stability and is not restricted by natural disasters.

The NTN technology may be combined with various communication systems. For example, the NTN technology may be combined with an NR system to form an NR-NTN system. As another example, the NTN technology may be combined with an IoT system to form an IoT-NTN system. For example, the IoT-NTN system may include an NB-IoT-NTN system and an eMTC-NTN system.

The NTN network consists of at least one of the following parts:

> one or more gateways, for connecting a satellite and the terrestrial public network;
> a feeder link: a link for the communication between the gateway and the satellite;
> a service link: a link for the communication between a terminal and the satellite;
> a satellite: which may be divided into a transparent transponding satellite and a regenerative transponding satellite based on its function. The transparent transponding satellite only provides functions of wireless frequency filtering, frequency conversion and amplification. The satellite only provides transparent transponding of signals, and does not change waveform signals it forwards. The regenerative transponding satellite may provide demodulation/-decoding, routing/conversion, encoding/modulation functions, in addition to providing the wireless frequency filtering, frequency conversion and amplification functions. The regenerative forwarding satellite has some or all of the functions of a base station; or
> a inter-satellite link: existing under architecture of the regenerative transponding network.

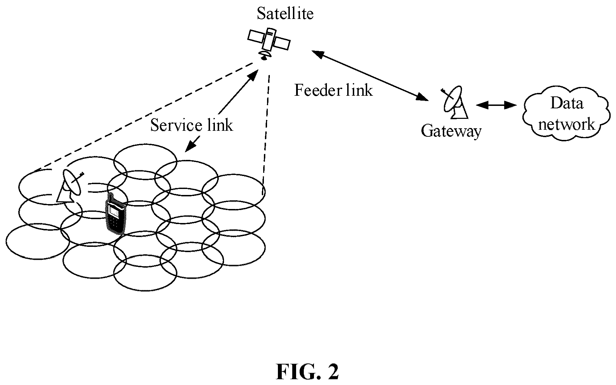

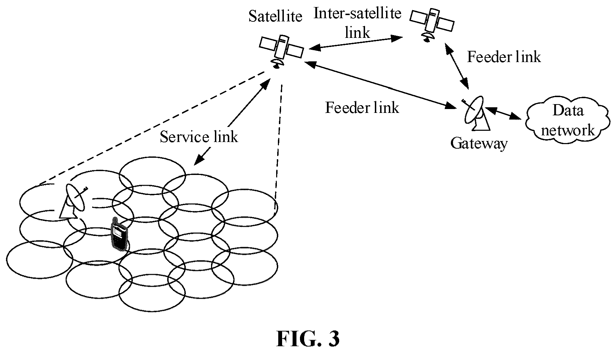

FIG. 2 is a schematic diagram of a transparent transponding satellite based NTN scenario according to an embodiment of the present disclosure, and FIG. 3 is a schematic diagram of a regenerative transponding satellite based NTN scenario according to an embodiment of the present disclosure.

As illustrated in FIG. 2, for the transparent transponding satellite based NTN scenario, the gateway and the satellite communicate with each other through the feeder link, and the satellite and the terminal may communicate with each other through the service link. As illustrated in FIG. 3, for the regenerative transponding satellite based NTN scenario, the satellite and the satellite may communicate with each other through the interstar link, the gateway and the satellite communicate with each other through the feeder link, and the satellite and the terminal may communicate with each other through the service link.

In FIG. 2 and FIG. 3, a gateway is for connecting the satellite and the terrestrial public network (such as a data network). The feeder link is the link for the communication between the gateway and the satellite. The service link is the link for the communication between the terminal and the satellite. The inter-satellite link exists under the architecture of the regenerative transponding network.

It is understood that, the above-mentioned satellite may include but be not limited to: a low-earth orbit (LEO) satellite, a medium-earth orbit (MEO) satellite, a geostationary earth orbit (GEO) satellite, a high elliptical orbit (HEO) satellite, and the like. The satellite may cover the ground by using multiple beams, for example, a satellite may form dozens or even hundreds of beams to cover the ground. In other words, a satellite beam may cover a ground region with a diameter of tens to hundreds of kilometers, to ensure the satellite coverage and improve the system capacity of the entire satellite communication system.

As an example, for the LEO satellite, an altitude range of may be 500 kilometers to 1,500 kilometers, the corresponding orbital period may be about 1.5 hours to 2 hours, a signal propagation delay of single-hop communication between users may generally be less than 20 milliseconds, and a maximum satellite visibility time may be 20 minutes. The LEO satellite has a short signal propagation distance and low link loss, and does not require a high transmission power for user terminals. For the GEO satellite, the orbital altitude may be 35,786 km, a rotation period around the earth may be 24 hours, and the signal propagation delay of single-hop communication between users may generally be 250 milliseconds.

In order to ensure the satellite coverage and improve the system capacity of the entire satellite communication system, the satellite may use multiple beams to cover the ground. One satellite may form dozens or even hundreds of beams to cover the ground, and one satellite beam may cover ground regions with a diameter of tens to hundreds of kilometers.

In a terrestrial communication system, a propagation delay of a signal communication may generally be less than 1 ms. In the NTN system, there is a long communication distance between the terminal device and the satellite (or called a network device), thus the propagation delay of the signal communication is very large, and the propagation delay may range from tens of milliseconds to hundreds of milliseconds. The specific propagation delay is related to at least one of: the satellite orbit altitude or a service type of the satellite communication. In order to handle the large propagation delay, compared with the NR system, a timing relationship in the NTN system needs to be enhanced.

Similar to the NR system, in the NTN system, the UE needs to consider influence of a timing advance (TA) when performing an uplink transmission. Due to the large propagation delay in the system, the range of the TA value is also large. When the UE is scheduled to perform the uplink transmission in a slot n, the UE performs the uplink transmission in advance by taking into account a round trip propagation delay, so that the signal can arrive in the uplink slot n of the network device when the signal reaches the network device.

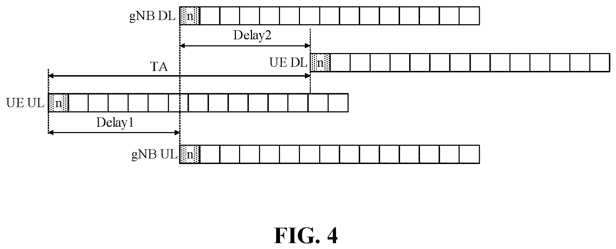

FIG. 4 is a schematic diagram of a timing relationship provided in an embodiment of the present disclosure. As illustrated in FIG. 4, a downlink slot of the network device (for example, gNB DL) and an uplink slot of the network device (for example, gNB UL) are aligned, that is, a downlink slot n of the network device and an uplink slot n of the network device are aligned.

The uplink transmission of the terminal device (UE UL) reaches the network device after a propagation delay 1 (Delay1), that is, the uplink transmission of the network device is delayed by Delay1 compared with the uplink transmission delay of the terminal device.

The downlink transmission of the network device reaches the terminal device after a propagation delay 2 (Delay2), that is, the downlink transmission of the terminal device (UE DL) is delayed by Delay2 compared with the downlink transmission of the network device.

In order to align the uplink transmission of the terminal device with the uplink slot of the network device, the terminal device needs to use a large TA value. Furthermore, the terminal device also needs to introduce a large offset value (such as Koffset) when performing the uplink transmission.

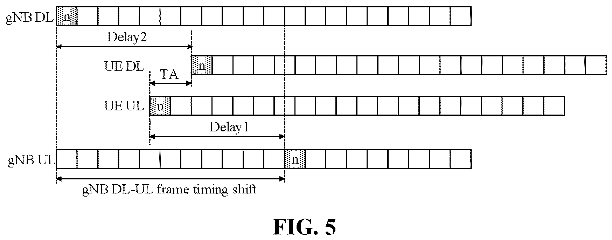

FIG. 5 is a schematic diagram of another timing relationship provided in an embodiment of the present disclosure. As illustrated in FIG. 5, there is an offset between a downlink slot of the network device (e.g., gNB DL) and an uplink slot of the network device (e.g., gNB UL), and the offset value is a gNB DL-UL frame timing shift of the network device, that is, the downlink slot n of the network device and the uplink slot n of the network device are not aligned.

The uplink transmission of the terminal device (UE UL) reaches the network device after a propagation delay 1 (Delay1), that is, the uplink transmission of the network device is delayed by Delay1 compared with the uplink transmission delay of the terminal device.

The downlink transmission of the network device reaches the terminal device after a propagation delay 2 (Delay2), that is, the downlink transmission of the terminal device (UE DL) is delayed by Delay2 compared with the downlink transmission of the network device.

In this case, in order to align the uplink transmission of the terminal device with the uplink slot of the network device, the terminal device only needs to use a relatively small TA value. However, in this case, the network device may require additional scheduling complexity to handle the corresponding scheduling timing.

The NR system has the following timing relationships.

Physical downlink shared channel (PDSCH) reception timing: when the UE is scheduled by downlink control information (DCI) to receive the PDSCH, indication information of $K_0$ is included in the DCI, $K_0$ is used for determining a slot in which the PDSCH is transmitted. For example, if the DCI for scheduling is received in slot n, then the slot allocated for the PDSCH transmission is slot

$$\left\lfloor n \cdot \frac{2^{\mu_{PDSCH}}}{2^{\mu_{PDCCH}}} \right\rfloor + K_0$$ , where $K_0$ is determined according to a subcarrier spacing of the PDSCH, and $\mu_{PDSCH}$ and $\mu_{PDCCH}$ are determined as the subcarrier spacing of the PDSCH and the subcarrier spacing of the physical downlink control channel (PDCCH), respectively. The value range of $K_0$ is 0 to 32.

Transmission timing of physical uplink shared channel (PUSCH) scheduled by DCI: when the UE is scheduled by the DCI to transmit the PUSCH, indication information of $K_2$ is included in the DCI, $K_2$ is used for determining a slot in which the PUSCH is transmitted. For example, if the DCI for scheduling is received in slot n, then the slot allocated for the PUSCH transmission is slot

$$\left\lfloor n \cdot \frac{2^{\mu_{PUSCH}}}{2^{\mu_{PDCCH}}} \right\rfloor + K_2$$ , where $K_2$ is determined according to the subcarrier spacing of the PDSCH, and $\mu_{PUSCH}$ and $\mu_{PDCCH}$ are determined as the subcarrier spacing of the PUSCH and the subcarrier spacing of the PDCCH, respectively. The value range of $K_2$ is 0 to 32.

Transmission timing of PUSCH scheduled by random access response (RAR) grant: for a slot of the PUSCH transmission scheduled by the RAR grant, after the UE initiates a physical random access channel (PRACH) transmission, if the an ending position of the PDSCH, including the corresponding RAR grant message, received by the UE is in the slot n, then the UE transmits the PUSCH on the slot n + $K_2$ + $\Delta$, where $K_2$ and $\Delta$ are agreed by the protocol.

Transmission timing for transmission of hybrid automatic repeat request-acknowledgment (HARQ-ACK) on PUCCH: for a slot in which the PUCCH is transmitted, if an ending position of a reception of a PDSCH is in slot n or an ending position of reception of a PDCCH indicating a semi-persistent scheduling (SPS) PDSCH release is in slot n, the UE shall transmit corresponding HARQ-ACK information in a PUCCH resource within the slot n + $K_1$, where $K_1$ is the number of slots and is indicated by a PDSCH-to-HARQ-timing-indicator information field in a DCI format, or it is provided by dl-DataToUL-ACK parameter. The fact that $K_1 = 0$ correspond to the situation that the last slot of the PUCCH transmission overlaps with the slot of the reception of the PDSCH or the slot of the reception of the PDCCH indicating the SPS PDSCH release.

Medium access control control element (MAC CE) activation timing: when HARQ-ACK information corresponding to the PDSCH including the MAC CE command is transmitted on slot n, a corresponding behavior indicated by the MAC CE command and a downlink configuration assumed by the UE shall be activated from the first slot after the slot $n + 3N_{slot}^{subframe,\mu}$ , where $N_{slot}^{subframe,\mu}$ represents the number of slots included in each subframe under the subcarrier spacing configuration $\mu$.

Transmission timing of channel state information (CSI) on PUSCH: in general, the transmission timing of the CSI on the PUSCH is the same as the transmission timing of the PUSCH transmission scheduled by the DCI.

CSI reference resource timing: a CSI reference resource for reporting a CSI on an uplink slot n' is determined according to a single downlink slot n - $n_{CSI\_ref}$, where $n = \left\lfloor n' \cdot \frac{2^{\mu_{DL}}}{2^{\mu_{UL}}} \right\rfloor$ , $\mu_{DL}$ and $\mu_{UL}$ are downlink and uplink subcarrier spacing configurations, respectively. The value of $n_{CSI\_ref}$ depends on a type of CSI reporting.

Aperiodic sounding reference signal (SRS) transmission timing: if the UE receives a DCI, which triggers transmission of an aperiodic SRS, in slot n, the UE transmits the aperiodic SRS in each triggered SRS resource set on slot $\left\lfloor n \cdot 2^{\frac{\mu_{SRS}}{\mu_{PDCCH}}} \right\rfloor + k$ , where k is configured by a higher-layer parameter (slotOffset) in each triggered SRS resource set and is determined according to a subcarrier spacing corresponding to the triggered SRS transmission, and $\mu_{SRS}$ and $\mu_{PDCCH}$ are a subcarrier spacing configuration of the triggered SRS transmission and a subcarrier spacing configuration of the PDCCH carrying the trigger command, respectively.

In the NR system, the PDSCH reception timing is only affected by the timing of the downlink reception side, and is not affected by the large round-trip delay in transmission in the NTN system, so the NTN system can reuse the PDSCH reception timing in the NR system.

For other timings affected by the interaction between the downlink reception and the uplink transmission, these timing relationships need to be enhanced in order to work normally in the NTN system, or to overcome the large transmission delay in the NTN system. A simple scheme is to introduce an offset parameter $K_{offset}$ (also called Koffset, Koffset, k offset or K offset, etc.) into the system and apply the parameter to the related timing relationships.

Transmission timing of DCI scheduled PUSCH (including CSI transmitted on PUSCH): if the DCI for scheduling is received in slot n, the slot allocated for the PUSCH transmission is slot

$$\left\lfloor n \cdot \frac{2^{\mu_{PUSCH}}}{2^{\mu_{PDCCH}}} \right\rfloor + K_2 + K_{offset}$$ .

Transmission timing of PUSCH scheduled by RAR grant: for the slot in which the PUSCH scheduled by the RAR grant is transmitted, the UE transmits the PUSCH in slot n + $K_2$ + $\Delta$ + $K_{offset}$.

Transmission timing for transmitting HARQ-ACK on PUCCH: for the slot in which the PUCCH is transmitted, the UE may transmit corresponding HARQ-ACK information on a PUCCH resource in slot $n + K_1 + K_{offset}$.

MAC CE activation timing: when the HARQ-ACK information corresponding to the PDSCH including the MAC CE command is transmitted in slot n, the corresponding behavior indicated by the MAC CE command and the downlink configuration assumed by the UE may be activated from the first slot after the slot

$$n + XN_{slot}^{subframe,\mu} + K_{offset}$$, where X may be determined based on a UE capability in the NTN, and the value of X may not be 3.

CSI reference resource timing: the CSI reference resource for reporting the CSI on the uplink slot n' is determined according to the single downlink slot $n - n_{CSI_{ref}} - K_{offset}$.

Aperiodic SRS transmission timing: if the UE receives the DCI, which triggers transmission of the aperiodic SRS, in slot n, the UE transmits the aperiodic SRS in each triggered SRS resource set in slot

$$\left\lceil n \cdot 2^{\frac{\mu_{SRS}}{\mu_{PDCCH}}} \right\rceil + k + K_{offset}$$.

For the configuration of $K_{offset}$, the network may configure the cell-level $K_{offset}$ through broadcasting. For the UE in a connected state, the network may configure UE specific $K_{offset}$ through the MAC. If the network is not configured with the UE specific $K_{offset}$, the UE uses the broadcast $K_{offset}$.

At present, in order to adapt to the large TA maintained by the UE in the NTN, a scheduling timing of the Uu interface is enhanced in the NTN. For the SL communication under the NTN network, if the transmitting side UE is configured with an SL resource allocation mode 1, in this mode, a resource for SL transmission is completely determined by scheduling of the serving base station of the UE. At this situation, the timing or timing sequence from reception of the PDCCH to the SL transmission by the UE and the timing from reception of a physical sidelink feedback channel (PSFCH) to the PUCCH transmission by the UE are affected due to an increase in the TA of the transmitting side UE in the NTN network. There is currently no disclosed solution on how to enhance the timing between the Uu transmission and the SL transmission in the NTN.

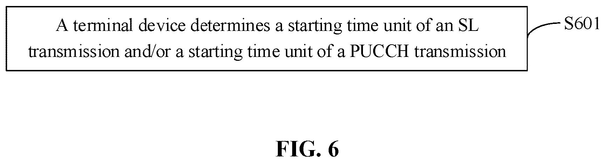

FIG. 6 is a schematic flowchart of a communication method provided in an embodiment of the present disclosure. As illustrated in FIG. 6, the method is applied to a terminal device and includes an operation S601.

At S601, a terminal device determines a starting time unit of an SL transmission and/or a starting time unit of a PUCCH transmission.

Alternatively, the SL transmission may be replaced with one of: SL information/data transmission, SL information/data sending, SL sending, SL channel transmission, and the like.

Alternatively, the PUCCH transmission may be replaced with one of: uplink control information (UCI) transmission, UCI sending, PUCCH information/data transmission, and PUCCH information/data sending.

Optionally, in any of the embodiments of the present disclosure, the time unit may include at least one of: one or more frames, one or more subframes, one or more slots, one or more symbols, or the like.

Optionally, in any of the embodiments of the present disclosure, the starting time unit may include at least one of: one or more starting frames, one or more starting subframes, one or more starting slots, one or more starting symbols, or the like. For example, the starting time unit may include one or more starting symbols in one or more starting slots. As another example, the starting time unit may include: one or more starting symbols in one or more starting slots in one or more starting frames/subframes. As yet another example, the starting time unit may include one or more starting slots.

Alternatively, the starting time unit may include at least one of: a starting frame, a starting subframe, a starting slot, or a starting symbol. For example, the starting time unit may include the starting symbol in the starting slot. As another example, the starting time unit may include the starting symbol in the starting slot in the starting frame/subframe. As yet another example, the starting time unit may include the starting slot. Illustratively, the starting time unit may include the starting slot.

Alternatively, the terminal device may determine the starting time unit of the SL transmission. Alternatively, the terminal device may determine the starting time unit of the PUCCH transmission. Alternatively, the terminal device may determine the starting time unit of the SL transmission and the starting time unit of the PUCCH transmission. Alternatively, the starting time unit of the SL transmission and the starting time unit of the PUCCH transmission may be different time units.

Optionally, in the case that the terminal device determines the starting time unit of the SL transmission, the terminal device may start the SL transmission from the starting time unit of the SL transmission. Optionally, the starting time unit of the SL transmission may be used for performing the SL transmission, or a resource corresponding to the starting time unit of the SL transmission may be used for carrying SL information. Alternatively, the starting time unit of the SL transmission may not be used for performing the SL transmission, and a time unit after the starting time unit of the SL transmission is used for performing the SL transmission. In other words, the resource corresponding to the starting time unit of the SL transmission is not used for carrying the SL information, and the time unit after the starting time unit of the SL transmission is used for carrying the SL information.

Optionally, in the case that the terminal device determines the starting time unit of the PUCCH transmission, the terminal device may start the PUCCH transmission from the starting time unit of the PUCCH transmission. Optionally, the starting time unit of the PUCCH transmission may be used for performing the PUCCH transmission, or a resource corresponding to the starting time unit of the PUCCH transmission may be used for carrying PUCCH information. Optionally, the starting time unit of the PUCCH transmission may not be used for performing the PUCCH transmission, and a time unit after the starting time unit of the PUCCH transmission is used for performing the PUCCH transmission. In other words, the resource corresponding to the starting time unit of the PUCCH transmission is not used for carrying the PUCCH information, and the time unit after the starting time unit of the PUCCH transmission is used for carrying the PUCCH information.

Optionally, the terminal device may determine the starting time unit of the SL transmission and/or the starting time unit of the PUCCH transmission according to at least one of: a pre-configuration of the terminal device, information configured by the network device for the terminal device, predefined information, or information agreed by a protocol.

In the embodiments of the present disclosure, the terminal device determines the starting time unit of the SL transmission and/or the starting time unit of the PUCCH transmission. In such way, firstly, the terminal device determines the starting time unit of the SL transmission and/or the starting time unit of the PUCCH transmission, and then performs the SL transmission and/or the PUCCH transmission starting from the starting time unit of the SL transmission and/or the starting time unit of the PUCCH transmission. Therefore, the SL transmission and/or the PUCCH transmission can be performed on corresponding resources, which is beneficial to improving the reliability of the SL transmission and/or the PUCCH transmission.

In some embodiments, a serving cell of the terminal device includes an NTN cell.

Optionally, when the serving cell of the terminal device includes the NTN cell, the terminal device determines the starting time unit of the SL transmission and/or the starting time unit of the PUCCH transmission.

Optionally, the terminal device determines the starting time unit of the SL transmission in the NTN cell, and/or, and the starting time unit of the PUCCH transmission in the NTN cell.

In some embodiments, the terminal device is configured with an SL resource allocation mode 1, or a resource, of the terminal device, for the SL transmission is scheduled by a network device to the terminal device.

Optionally, the starting time unit of the SL transmission may include: a starting time unit of the SL transmission on an SL resource scheduled by the network device to the terminal device.

Optionally, the SL resource allocation mode 1 may include that the SL resource is scheduled by the network device.

Optionally, the terminal device determines that the SL resource allocation mode is the SL resource allocation mode 1 according to the pre-configuration, that is, the terminal device is configured with the SL resource allocation mode 1. Alternatively, the terminal device may activate the SL resource allocation mode 1 by the terminal device itself, such that the terminal device is configured with the SL resource allocation mode 1. Alternatively, the terminal device may receive activation of the SL resource allocation mode 1 from the network device, to active the SL resource allocation mode 1, such that enable the terminal device is configured with the SL resource allocation mode 1.

Optionally, the SL resource allocation mode 1 may be included in a plurality of SL resource allocation modes. Optionally, the plurality of SL resource allocation modes include at least one of: SL resource allocation mode 1, SL resource allocation mode 2, or the like. Optionally, the SL resource allocation mode 2 may include that the SL resource is selected by the terminal device itself.

In some embodiments, the operation that the terminal device determines the starting time unit of the SL transmission may include that: the terminal device determines the starting time unit of the SL transmission based on a first offset.

In some embodiments, the operation that the terminal device determines the starting time unit of the SL transmission may include that: the terminal device determines the starting time unit of the SL transmission indicated/scheduled by a PDCCH.

In some embodiments, the operation that the terminal device determines the starting time unit of the SL transmission may include that: the terminal device determines, based on the first offset, the starting time unit of the SL transmission indicated/scheduled by the PDCCH.

Optionally, the first offset may include at least one of: one or more frames, one or more subframes, one or more slots, one or more symbols, or the like. Optionally, the first offset may be a duration or may be 0.

Optionally, the SL transmission indicated/scheduled by the PDCCH may include that: the PDCCH indicates/schedules an SL resource, and the SL resource is used for the SL transmission.

Optionally, the SL transmission indicated/scheduled by the PDCCH may be one SL transmission. Therefore, the SL resource indicated/scheduled by the PDCCH may be a resource for one SL transmission. For example, each time the terminal device receives the PDCCH, the terminal device performs the SL transmission indicated/scheduled by the PDCCH once, and the next SL transmission indicated/scheduled by the PDCCH requires indication by a next received PDCCH.

Optionally, the SL transmission indicated/scheduled by the PDCCH may be multiple SL transmissions, or periodic SL transmissions, or a semi-persistent SL transmission. In such situation, the SL resource indicated/scheduled by the PDCCH may be a resource for multiple SL transmissions, or may be a resource for the periodic SL transmissions, or may be a resource for the semi-persistent SL transmission. For example, when the terminal device receives a PDCCH once, the terminal device performs the SL transmission indicated/scheduled by the PDCCH many times, or performs the periodic SL transmissions indicated/scheduled by the PDCCH, or performs the semi-persistent SL transmission indicated/scheduled by the PDCCH. Optionally, the network device may also indicate to stop the SL transmission through a PDCCH. Optionally, the PDCCH may indicate at least one of a period, a starting time unit, or an ending time unit of the SL transmission.

Illustratively, in case that the PDCCH indicates the starting time unit of the SL transmission indicated/scheduled by the PDCCH, the terminal device may start the SL transmission from the starting time unit of the SL transmission indicated/scheduled by the PDCCH. Illustratively, in case that the PDCCH indicates the starting time unit of the SL transmission indicated/scheduled by the PDCCH, the terminal device may start the SL transmission from a starting time point or an ending time point in the starting time unit of the SL transmission indicated/scheduled by the PDCCH.

Optionally, the PDCCH may indicate at least one of an ending time unit of the SL transmission, a starting time unit of the PUCCH transmission, or an ending time unit of the PUCCH transmission.

Illustratively, in case that the PDCCH indicates the ending time unit of the SL transmission, the terminal device may perform the SL transmission in the time between the starting time unit of the SL transmission and the ending time unit of the SL transmission.

Illustratively, in case that the PDCCH indicates the starting time unit of the PUCCH transmission, the terminal device may start the PUCCH transmission from the starting time unit of the PUCCH transmission, or from a starting time point or an ending time point in the starting time unit of the PUCCH transmission. Optionally, the network device may start the PUCCH transmission from the starting time unit of the PUCCH transmission, or from the starting time point or the ending time point in the starting time unit of the PUCCH transmission.

In some embodiments, the terminal device determines, based on the first offset and a moment when the PDCCH is received, the starting time unit of the SL transmission indicated/scheduled by the PDCCH.

Optionally, in any of the embodiments of the present disclosure, the moment may be a time point, or may be a time unit.

Optionally, the terminal device determines, based on a sum of the first offset and the moment when receiving the PDCCH, the starting time unit of the SL transmission indicated/scheduled by the PDCCH.

Optionally, the terminal device determines, based on the first offset and a starting moment of a downlink time unit in which a DCI corresponding to the received PDCCH is located, the starting time unit of the SL transmission indicated/scheduled by the PDCCH.

Optionally, the terminal device determines, based on a sum of the first offset and the starting moment of the downlink time unit in which the DCI corresponding to the received PDCCH is located, the starting time unit of the SL transmission indicated/scheduled by the PDCCH.

Optionally, the downlink time unit may include: a downlink frame, a downlink subframe, a downlink slot, a downlink symbol, or the like. For example, the downlink time unit may include the downlink slot.

In some embodiments, the method further includes that the terminal device receives an SL dynamic scheduling grant indicated by the PDCCH.

In some embodiments, the method further includes that the terminal device receives activation, indicated by the PDCCH, of an SL configured grant type 2.

In some embodiments, the method further includes that the terminal device receives activation, indicated by the PDCCH, of the SL transmission grant indicated by the PDCCH.

Optionally, in case that the terminal device receives the SL dynamic scheduling grant indicated by the PDCCH, or the terminal device receives the activation, of the SL configured grant type 2, indicated by the PDCCH, or the terminal device receives the activation, indicated by the PDCCH, of the SL transmission grant indicated by the PDCCH, the terminal device determines, based on the first offset, the starting time unit of the SL transmission indicated/scheduled by the PDCCH.

Optionally, the SL configuration grant type 2 may include that the SL transmission grant is provided by the PDCCH/DCI. Optionally, the activation of the SL transmission grant is indicated by the PDCCH/DCI. A parameter required for the SL transmission grant is configured by an information element (IE) configured grant configuration (for example, IE ConfiguredGrantConfig), and the SL transmission grant needs to be activated by the PDCCH/DCI, in order to be used.

Optionally, the SL configuration grant type 2 is included in a plurality of SL configuration grant types. Optionally, the plurality of SL configuration grant types include at least one of: SL configuration grant type 1 or SL configuration grant type 2. The SL configuration grant type 1 indicates that the SL transmission grant is configured by the RRC through a higher layer signaling.

In some embodiments, the starting time unit of the SL transmission indicated/scheduled by the PDCCH is in a resource pool of the SL transmission and is not earlier than a first moment.

The first moment is determined based on the first offset.

Alternatively, the resource pool of the SL transmission may also be referred to as an SL data resource pool or an SL communication resource pool. Optionally, the resource pool for the SL transmission may be a resource pool used for performing the SL transmission. Optionally, the resource pool of the SL transmission may include a resource pool of SL sending and/or a resource pool of SL reception.

Optionally, the resource pool of the SL transmission may be predefined by the terminal device, may be preconfigured, or may be agreed by a protocol.

Optionally, the first moment may be determined based on the first offset and the moment when the terminal device receiving the PDCCH.

Optionally, a starting point of the starting time unit of the SL transmission indicated/scheduled by the PDCCH is in the resource pool of the SL transmission and is not earlier than the first moment.

Optionally, the starting time unit of the SL transmission indicated/scheduled by the PDCCH is not earlier than a first slot after the first moment, or not earlier than a first symbol after the first moment, or not earlier than a first frame after the first moment, or not earlier than a first subframe after the first moment.

Optionally, in any of the embodiments of the present disclosure, the term not earlier than may include being later than or equal to.

Optionally, a starting moment of the starting time unit of the SL transmission indicated/scheduled by the PDCCH may be the same as the first moment or after the first moment (i.e., later than the first moment).

In some embodiments, the first moment is determined based on the first offset and at least one of:

> a second moment, including a starting moment of a downlink slot in which a DCI corresponding to the PDCCH is located;
> a TA of a timing advance group (TAG) to which a serving cell of the terminal device belongs;
> a time unit interval indicated by a DCI corresponding to the PDCCH; or
> a duration of a time unit.

For example, the first moment may be determined based on the first offset and a second moment. For another example, the first moment may be determined based on the first offset and the TA. For another example, the first moment may be determined based on the first offset, a time unit interval indicated by a DCI, and a duration of the time unit. For another example, the first moment may be determined based on the first offset, the second moment and the TA. For another example, the first moment may be determined based on the first offset, the second moment, the time unit interval indicated by the DCI, and the duration of the time unit. For another example, the first moment may be determined based on the first offset, the TA, the time unit interval indicated by the DCI, and the duration of the time unit. For another example, the first moment may be determined based on the first offset, the second moment, the TA, the time unit interval indicated by the DCI, and the duration of the time unit.

Alternatively, in other embodiments, the second moment may be different from that in the above embodiments. For example, the second moment may include an ending moment of the DCI corresponding to the PDCCH, or a starting moment of the DCI corresponding to the PDCCH, or an ending moment of a downlink slot in which the DCI corresponding to the PDCCH is located, or a starting moment or an ending moment of a downlink symbol in which the DCI corresponding to the PDCCH is located, or the like.

Optionally, the time unit interval may include a frame interval, a subframe interval, a slot interval, or a symbol interval. The time unit interval may be an integer or fractional multiple of the time unit. For example, the time unit interval may be 1 time unit, 0.5 time unit, 1.5 time units, 5 time units, or the like. Illustratively, in the case that the time unit interval includes a slot interval, the slot interval may be 1 slot, 0.5 slot, 1.5 slots, 5 slots, or the like.

In some embodiments, the first moment is determined based on the first offset and at least one of: the second moment, TA/2, or a product of the time unit interval and the duration of the time unit.

For example, the first moment may be determined based on the first offset and the second moment. For another example, the first moment may be determined based on the first offset and TA/2. For another example, the first moment may be determined based on the first offset and the product of the time unit interval and the duration of the time unit. For another example, the first moment may be determined based on the first offset, the second moment and TA/2. For another example, the first moment may be determined based on the first offset, the second moment and the product of the time unit interval and the duration of the time unit. For another example, the first time may be determined based on the first offset, TA/2, and the product of the time unit interval and the duration of the time unit. For another example, the first time may be determined based on the first offset, the second moment, TA/2, and the product of the time unit interval and the duration of the time unit.

In some embodiments, the first moment is determined based on:
subtracting the TA/2 from the second moment to obtain a result, adding the first offset, and then adding a product of the time unit interval and the duration of the time unit to the result.

Optionally, the first instant is determined by the following formula:

$$T_{DL} - \frac{T_{TA}}{2} + \text{offset1} + K_{SL} \times T_{slot}.$$

$T_{DL}$ is the second moment; $T_{TA}$ is TA; offset1 is the first offset; $K_{SL}$ is the time unit interval; and $T_{slot}$ is the duration of the slot.

In some embodiments, the first offset is determined based on a second offset configured by the network device for the terminal device.

Optionally, the first offset may be the same as or different from the second offset. Optionally, the first offset may be greater than, less than, or equal to the second offset.

In some embodiments, the first offset is determined based on a cell-level second offset.

Optionally, the cell-level second offset may be referred to as a cell-level offset in other embodiments.

Optionally, the first offset may be the cell-level second offset, or the first offset may be obtained by calculating based on the cell-level second offset.

Optionally, the cell-level second offset may include at least one of: a maximum cell offset, a minimum cell offset, an offset determined based on the maximum cell offset and/or the minimum cell offset.

Optionally, the cell-level second offset may be broadcast/multicast by the network device. Optionally, the cell-level second offset may be included in, or carried in, or indicated by one of: system information (SI), a master information block (MIB), and a system information block (SIB).

Optionally, the cell-level second offsets obtained by different terminal devices in one cell are the same.

In some embodiments, when the terminal device is not configured with a terminal device-specific second offset, the first offset is determined based on the cell-level second offset.

Optionally, the terminal device-specific second offset may be referred to as a terminal device specific offset in other embodiments.

Optionally, the terminal device-specific second offset may be configured by the network device for the terminal device separately. Optionally, the terminal device-specific second offsets obtained by different terminal devices in one cell may be the same or different. Optionally, the network device may configure the terminal device-specific second offset to the terminal device according to a distance or an information propagation delay between the network device and the terminal device.

Optionally, when the terminal device is configured with the terminal device-specific second offset, the first offset is determined based on the terminal device-specific second offset.

In some embodiments, the first offset is determined based on the cell-level second offset and a first value.

Optionally, in any of the embodiments of the present disclosure, the first value may be a real number greater than or equal to 0. For example, the first value may be 0, 0.5, 1, 2, 3, or the like.

Optionally, when the cell-level second offset is the maximum cell offset, the first value is a real number greater than or equal to 0 and less than or equal to 1. Optionally, when the cell-level second offset is the minimum cell offset, the first value is a real number greater than or equal to 1.

Illustratively, the first offset may be determined based on a product of the cell-level second offset and the first value. Illustratively, the first offset may be determined based on a sum of the cell-level second offset and the first value. Illustratively, the first offset may be determined based on a difference of the cell-level second offset and the first value.

In some embodiments, the first offset is determined based on the product of the cell-level second offset and the first value.

Optionally, the first offset may include the product of the cell-level second offset and the first value. Optionally, the first offset may include an offset obtained by mathematically calculating based on the product of the cell-level second offset and the first value.

In some embodiments, the first offset is determined based on the terminal device-specific second offset.

Optionally, the first offset may be the terminal device-specific second offset, or the first offset may be obtained by calculating based on the terminal device-specific second offset.

Optionally, when the terminal device is configured with the terminal device-specific second offset, the first offset is determined based on the terminal device-specific second offset.

Optionally, the terminal device-specific second offset may be unicast by the network device to the terminal device, or the terminal device-specific second offset may be determined by the terminal device based on the cell-level second offset. For example, the terminal device determines the terminal device-specific second offset by mathematically calculating based on the cell-level second offset.

Optionally, the terminal device-specific second offset may be included in or carried in or indicated by one of: an RRC signaling, an MAC CE, and a DCI corresponding to the PDCCH.

In some embodiments, the first offset is determined based on the terminal device-specific second offset and the first value.

Illustratively, the first offset may be determined based on a product of the terminal device-specific second offset and the first value. Illustratively, the first offset may be determined based on a sum of the terminal device-specific second offset and the first value. Illustratively, the first offset may be determined based on a difference between the terminal device-specific second offset and the first value.

In some embodiments, the first offset is determined based on the product of the terminal device-specific second offset and the first value.

Optionally, the first offset may include the product of the terminal device-specific second offset and the first value. Optionally, the first offset may include an offset obtained by mathematically calculating based on the product of the terminal device-specific second offset and the first value.

In some embodiments, the first value is configured by the network device for the terminal device, or the first value is determined by the terminal device based on a pre-configuration, or the first value is agreed by a protocol, or the first value is predefined.

Optionally, the network device may broadcast/-

multicast/unicast the first value, so that the terminal device can obtain the first value.

Optionally, the first value may be included in or carried in or indicated by one of: an SI, an MIB, an SIB, an RRC signaling, an MAC CE, and a DCI corresponding to the PDCCH.

Optionally, the first value may be associated with a distance between the terminal device and the network device. Optionally, the first value may be associated with an information propagation duration from the terminal device to the network device and/or an information propagation duration from the network device to the terminal device. For example, the longer the distance between the terminal device and the network device or the longer the information propagation duration, the larger the value of the first value, and conversely, the shorter the distance between the terminal device and the network device or the shorter the information propagation duration, the smaller the value of the first value.

Optionally, the first value is associated with at least one of: a movement speed, a movement direction, a movement distance, a movement route, and the like, of the terminal device. For example, when the movement distance of the terminal device gradually increases and the terminal device moves away from the network device, the first value gradually increases. For another example, when the movement distance of the terminal device gradually increases and the terminal device moves closer to the network device, the first value gradually decreases.

Optionally, the first value may be selected from a plurality of values. Optionally, the plurality of first values may be configured by the network device for the terminal device, or may be determined by the terminal device based on a pre-configuration, or may be agreed by a protocol, or may be predefined.

In some embodiments, the first offset is an offset configured by the network device for the terminal device.

In some embodiments, the first offset is carried in or indicated by at least one of: an SIB, an RRC signaling dedicated to the terminal device, an MAC CE, or the PDCCH.

In some embodiments, the first offset is predefined or is agreed by the protocol.

In some embodiments, the first offset is associated with a first cell type, the first cell type is included in one or more cell types, and different cell types of a plurality of cell types are associated with different offsets.

For example, the first cell type is associated with the first offset, a second cell type is associated with a second offset, a third cell type is associated with a third offset, and the like.

Optionally, the different cell types may differ in at least one of: NTN scenarios corresponding to cells, and heights of network devices corresponding to the cells to the ground. Optionally, the NTN scenario may include at least one of: GEO, MEO, LEO.

Optionally, because different cell types are associated with different offsets, when the cell types of the serving cells of the terminal device are different, the offsets used by the terminal device are different.

In other embodiments, different cell types are associated with the same first offset. For example, any two different cell types are associated with the first offset.

Optionally, because different cell types are associated with the same first offset, when the cell types of the serving cells of the terminal device are different, the offsets used by the terminal device are the same first offset.

In some embodiments, the operation that the terminal device determines the starting time unit of the PUCCH transmission may include that: the terminal device determines the starting time unit of the PUCCH transmission based on a first time interval.

In some embodiments, the operation that the terminal device determines the starting time unit of the PUCCH transmission may include that: the terminal device determines the starting time unit of the PUCCH transmission corresponding to a reception of a PSFCH.

In some embodiments, the operation that the terminal device determines the starting time unit of the PUCCH transmission may include the following operation.

The terminal device determines, based on the first time interval, the starting time unit of the PUCCH transmission corresponding to the reception of the PSFCH.

Optionally, the first time interval may include at least one of: one or more frames, one or more subframes, one or more slots, one or more symbols, or the like. Optionally, the first time interval may be a duration or may be 0.

Optionally, the starting time unit of the PUCCH transmission corresponding to the reception of the PSFCH may be located after the first time interval after the reception of the PSFCH.

Optionally, firstly, the terminal device receives the PDCCH, then the terminal device determines the starting time unit of the SL transmission indicated/scheduled by the PDCCH. Then, the terminal device starts the SL transmission from the starting time unit of the SL transmission or from a starting time point or an ending time point of the starting time unit of the SL transmission, and when the terminal device receives the PSFCH, the terminal device determines the starting time unit of the PUCCH transmission corresponding to the reception of the PSFCH. Then, the terminal device starts the PUCCH transmission in the starting time unit of the PUCCH transmission or in a starting time point or an ending time point of the starting time unit of the PUCCH transmission.

In some embodiments, the PUCCH transmission includes transmission of HARQ feedback information on the PUCCH resource.

Optionally, the HARQ feedback information may be HARQ feedback information for the received PSFCH. Optionally, the HARQ feedback information may include an HARQ-ACK or an HARQ-negative acknowledgement (HARQ-NACK).

In some embodiments, the starting time unit of the PUCCH transmission is located after the first time interval after ending of the reception of the PSFCH.

Optionally, the time unit located after the ending of the reception of the PSFCH may include that the time unit is located: after a slot corresponding to the received PSFCH, or after a starting time point or an ending time point of the slot corresponding to the received PSFCH, or after a starting time point or an ending time point corresponding to the received PSFCH, or after a starting time point or an ending time point of a symbol corresponding to the received PSFCH, or after the symbol corresponding to the received PSFCH.

In some embodiments, the starting time unit of the PUCCH transmission is determined based on a sum of an ending time unit of the reception of the PSFCH and the first time interval.

Optionally, the starting time unit of the PUCCH transmission may not be earlier than the sum of the ending time unit of the reception of the PSFCH and the first time interval. Alternatively, the starting time unit of the PUCCH transmission may be the sum of the ending time unit of the reception of the PSFCH and the first time interval. Alternatively, the starting time unit of the PUCCH transmission may be obtained by mathematically calculating based on the sum of the ending time unit of the reception of the PSFCH and the first time interval.

In some embodiments, the starting time unit of the PUCCH transmission is determined based on a sum of the ending time unit of the reception of the PSFCH, the first time interval and a second time interval.

The second time interval includes a time interval from a moment, as a starting moment, corresponding to a sum of the ending time unit of the reception of the PSFCH and the first time interval to a first or a latest available PUCCH resource.

Optionally, the starting time unit of the PUCCH transmission may include the sum of the ending time unit of the reception of the PSFCH, the first time interval and the second time interval. Alternatively, the starting time unit of the PUCCH transmission may be determined by mathematically calculating based on the sum of the ending time unit of the reception of the PSFCH, the first time interval and the second time interval.

Optionally, the second time interval may include at least one of: one or more frames, one or more subframes, one or more slots, one or more symbols, or the like. Optionally, the second time interval may be a duration or may be 0.

Optionally, the ending time unit of the reception of the PSFCH is slot n, the first time interval is m, and the second time interval may include at least one of the following situations.

If there is an available PUCCH resource on the first symbol in slot n + m, the second time interval is 0.

If there is an available PUCCH resource on the second symbol in slot n + m, the second time interval is 0 slot or 2 symbols.

If the first available PUCCH resource or the latest available PUCCH resource is in slot n + m + 1 (i.e., there is no available PUCCH resource in slot n + m), then, if there is an available PUCCH resource on the first symbol in slot n + m + 1, the second time interval is 1 slot; and if there is an available PUCCH resource on the third symbol in slot n + m + 1, the second time interval is 1 slot, or 1 slot and 2 symbols.

In some embodiments, the first time interval is a minimum time unit interval between a transmission resource of the PSFCH and a transmission resource of the PUCCH.

In some embodiments, the first time interval is determined based on the minimum time unit interval between the transmission resource of the PSFCH and the transmission resource of the PUCCH.

For example, the first time interval may be determined by mathematically calculating based on the minimum time unit interval. For example, the first time interval may be the minimum time interval plus a specific time interval.

In some embodiments, the first time interval is determined by the terminal device based on a capability of the terminal device.

Optionally, different capabilities may correspond to the same time interval or different time intervals. For example, when the capability of the terminal device is a first capability, the corresponding time interval is the first time interval; and/or, when the capability of the terminal device is a second capability, the corresponding time interval is the second time interval.

Optionally, the capability of the terminal device may be determined based on a pre-configuration of the terminal device or may be determined based on a configuration from the network device to the terminal device. Optionally, the terminal device may have a plurality of capabilities, and the terminal device may determine, based on the pre-configuration, a capability currently activated or used by the terminal device from the plurality of capabilities, or the terminal device may determine a capability currently activated or used by the terminal device from the plurality of capabilities based on the configuration from the network device to the terminal device. Alternatively, the terminal device may have one capability.

Optionally, the terminal device may transmit the first time interval to the network device. Optionally, the terminal device may transmit the capability of the terminal device to the network device, so that the network device determines the first time interval based on the capability of the terminal device.

In some embodiments, the first time interval is configured by the network device for the terminal device.

In some embodiments, the first time interval is broadcast/multicast by the network device.

Optionally, the first time interval may be included in or carried in or indicated by one of: an SI, an MIB, and an SIB.

In some embodiments, the first time interval is configured by the network device for the terminal device through a signaling dedicated to the terminal device.

Optionally, the first time interval may be included in or carried in or indicated by one of: an RRC signaling, an MAC CE, and a DCI corresponding to the PDCCH.

In some embodiments, the first time interval is indicated in the DCI corresponding to the PDCCH.

In some embodiments, the first time interval is predefined or is agreed by a protocol.

In some embodiments, the method may further include the following operation.

The terminal device transmits the second time interval to a network device. The second time interval is determined by the terminal device based on the capability of the terminal device, and the second time interval is used for the terminal device and/or the network device to determine the first time interval.

Optionally, the terminal device and/or the network device may determine the second time interval as the first time interval. Alternatively, the terminal device and/or the network device may obtain the first time interval by mathematically calculating based on the second time interval.

In some embodiments, the first time interval is included in one or more time intervals configured by a higher layer.

Optionally, in case that one time interval is configured by the higher layer, the first time interval is the time interval configured by the higher layer.

Optionally, in case where a plurality of time intervals are configured by the higher layer, the first time interval is selected from the plurality of time intervals. Optionally, the network device may indicate the first time interval among the plurality of time intervals to the terminal device. For example, the network device may indicate the first time interval among the plurality of time intervals to the terminal device by one of: an SI, an MIB, an SIB, an RRC signaling, an MAC CE, and a DCI corresponding to the PDCCH. Optionally, the terminal device may determine the first time interval among the plurality of time intervals according to the pre-configuration.

There provides two embodiments in the following.

First embodiment

In the NTN, for the SL transmission indicated by the PDCCH, the UE determines a starting slot of the SL transmission based on the first offset (which may also be referred to as a first time-domain offset). Optionally, the value of the first offset is configured by the network device or is a predefined value.

Optionally, for the UE configured with the SL resource allocation mode 1, when the UE receives an SL dynamic scheduling grant indicated by the PDCCH, or receives activation, indicated by the PDCCH, of an SL configured grant type 2, if the current cell is an NTN cell, then, the UE determines a slot corresponding to the first SL transmission scheduled by the PDCCH based on the first time-domain offset and the moment when receiving the PDCCH.

Optionally, the slot of the first SL transmission resource scheduled by the PDCCH is the first slot located in the corresponding resource pool and is not earlier than the moment $T_{DL} - \frac{T_{TA}}{2} + \text{offset1} + K_{SL} \times T_{slot}$.

$T_{DL}$ is a moment corresponding to a starting position of a downlink slot in which the DCI is located.

$T_{TA}$ is a TA corresponding to a TAG to which the serving cell for receiving the DCI by the UE belongs.

$K_{SL}$ is a slot interval determined according to a Time gap information field in the DCI and a higher layer configuration sl-DCI-ToSL-Trans, and $T_{slot}$ represents a duration of a slot.

offset1 is the first offset.

Optionally, the first offset offset1 may be determined by at least one of the following determination manners.

Manner 1: the first offset offset1 is determined by network device configuration.

For example, offset1 is determined according to a cell-level Koffset (i.e., cellSpecificKoffset) broadcast by the network device in an NTN cell. For example, offset1 = cellSpecificKoffset * alpha, where the value of alpha (corresponding to the above first value) may be configured by the network device or may be a predefined value, for example, alpha = 1/2.

For another example, offset1 is determined according to a UE specific Koffset of the UE in the NTN cell, for example, offset1 = UE Specific Koffset * alpha, where the value of alpha may be configured by the network device, or may be a predefined value, for example, alpha = 1/2. Optionally, if the UE is not configured with the UE specific Koffset, offset1 is determined according to a cell-level Koffset broadcast by the network device in the NTN cell, that is, the UE specific Koffset in the above formula is replaced with cellSpecificKoffset.

For another example, offset1 is a parameter separately configured by the network device (i.e., which is independent of Koffset), and the configuration parameter may be carried in at least one signaling of: an SIB, an RRC signaling dedicated to the UE, an MAC CE, or a PDCCH.

Manner 2: the first offset offset1 uses a predefined value.

For example, a value of offset1 is predefined for each of different NTN scenarios (such as the GEO scenario, the MEO scenario, and the LEO scenario), and the UE uses a corresponding value of the offset1 according to the current NTN cell type.

For another example, regardless of NTN scenarios, a common value of the offset1 is predefined for all NTN scenarios.

Second embodiment

In the NTN, for the SL transmission, the UE transmits corresponding HARQ feedback information on the first available PUCCH resource not earlier than a first time interval after completion of reception of a PSFCH, and the value of the first time interval is determined by UE capability and/or a manner of a network device configuration or a pre-definition.

Optionally, for a UE configured with the SL resource allocation mode 1, the UE completes reception of the PSFCH in slot n, the slot n being an ending slot of the PSFCH reception occasion, and if the current cell is the NTN cell, then, the UE transmits the corresponding HARQ feedback information on the PUCCH resource at slot n + k + delta PUCCH.

delta_pucch is a time interval from the PUCCH slot n + k to the first available PUCCH resource.

k is the minimum slot interval between the transmission resource of the PSFCH and the transmission resource of the PUCCH. Optionally, the interpretation relevant to the value k includes at least one of the following interpretations.

The UE/network device determines the value k according to the UE processing capability.

The UE reports the value k to the network device.

The network device configures the value k to the UE through broadcasting or a signaling (such as an RRC signaling) dedicated to the UE.

The UE may report the minimum value k that it can support according to the capability, to assist the network device configuration.

The network device indicates the value k in a DCI indicating the SL scheduling (that is, reuse of the related technology), the higher layer configures a plurality of interval values from the PSFCH to the PUCCH (that is, the parameter sl-PSFCH-ToPUCCH), and the DCI indicates one of these values.

The k value takes a predefined value.

The embodiments of the present disclosure provide a method for determination of a scheduling timing by a sidelink terminal in an NTN. According to this method, the transmission/reception of the UE through the Uu interface and the reception/transmission of the UE through the PC5 interface can be better matched with a large TA of the UE in the NTN.

In the embodiments of the present disclosure, in the NTN, for the SL transmission indicated by the PDCCH, the UE determines the starting slot of the SL transmission based on the first time-domain offset, and the value of the first offset is configured by the network device or is a predefined value.

In the embodiments of the present disclosure, in the NTN, for the SL transmission, the UE transmits corresponding HARQ feedback information on the first available PUCCH resource not earlier than the first time interval after completion of reception of the PSFCH, and the value of the first time interval is determined based on the UE capability and/or the network device configuration or the predefined manner.

Preferred embodiments of the disclosure have been described in detail above with reference to the accompanying drawings. However, the disclosure is not limited to the specific details of the above embodiments. Various simple modifications may be made to the technical solution of the present disclosure within the scope of the technical conception of the disclosure, and these simple modifications shall fall within the scope of protection of the present disclosure. For example, various specific technical features described in the above specific embodiments may be combined in any suitable manner without contradiction, and various possible combinations are not further described in the disclosure in order to avoid unnecessary repetition. For another example, various implementations of the present disclosure may also be arbitrarily combined with each other, as long as the combination does not depart from the idea of the disclosure and the combinations shall also be considered as the content of the disclosure. For another example, various embodiments described in the disclosure and/or the technical features in the embodiments may be combined with the prior art in any manner on the premise of no conflict, and the combined technical solution should also fall within the scope of protection of the present disclosure.

It should be understood that in various method embodiments of the present disclosure, the sequence number of the above-mentioned operations does not mean an order of execution, and the execution order of the operations is determined by their functions and inherent logic, which should not be limited in any way to the implementation process of the embodiments of the disclosure. Further, in the embodiments of the disclosure, the terms "downlink", "uplink" and "sidelink" each represents a transmission direction of a signal or data. The term "downlink" represents that the transmission direction of the signal or data is a first direction from a site to a UE in a cell, the term "uplink" represents that the transmission direction of the signal or data is a second direction from the UE in the cell to the site, and the term "sidelink" represents that the transmission direction of the signal or data is a third direction from a first UE to a second UE. For example, the "downlink signal" means that the transmission direction of the signal is the first direction. In addition, in the embodiments of the disclosure, the term "and/or" herein is only used to describe an association relationship between associated objects, and represents that three relationships may exist. Specifically, A and/or B may represent three conditions: i.e., independent existence of A, existence of both A and B and independent existence of B. In addition, the character "/" in the disclosure usually represents that previous and next associated objects form an "or" relationship.

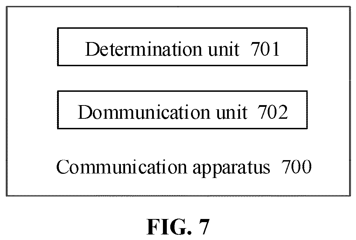

FIG. 7 is a schematic diagram of structural composition of a communication apparatus provided in an embodiment of the present disclosure. The communication apparatus is applied to a terminal device, and as illustrated in FIG. 7, the communication apparatus 700 includes a determination unit 701.

The determination unit 701 is configured to determine a starting time unit of an SL transmission and/or a starting time unit of a PUCCH transmission.

In some embodiments, the communication apparatus 700 may be included in a terminal device, or the communication apparatus 700 may be applied to a terminal device.

In some embodiments, the communication apparatus 700 further includes a communication unit 702. The communication unit 702 is configured to: start the SL transmission from a starting time unit of the SL transmission, or from a starting time point or an ending time point of the starting time unit of the SL transmission; or start the PUCCH transmission from a starting time unit of the PUCCH transmission, or from a starting time point or an ending time point of the starting time unit of the PUCCH transmission.

In some embodiments, a serving cell of the terminal device includes an NTN cell.

In some embodiments, the terminal device is configured with an SL resource allocation mode 1, or a resource, of the terminal device, for the SL transmission is scheduled by a network device to the terminal device.

In some embodiments, the determination unit 701 is further configured to: determine, based on the first offset, the starting time unit of the SL transmission indicated/scheduled by a PDCCH.

In some embodiments, the determination unit 701 is further configured to: determine, based on the first offset and a moment when the PDCCH is received, the starting time unit of the SL transmission indicated/scheduled by the PDCCH.

In some embodiments, the communication unit 702 is further configured to: receive an SL dynamic scheduling grant indicated by the PDCCH; or receive activation, indicated by the PDCCH, of an SL configured grant type 2; or receive activation, indicated by the PDCCH, of the SL transmission grant indicated by the PDCCH.

In some embodiments, the starting time unit of the SL transmission indicated/scheduled by the PDCCH is in a resource pool of the SL transmission and is not earlier than a first moment.

The first moment is determined based on the first offset.

In some embodiments, the first moment is determined based on the first offset and at least one of:

a second moment, including a starting moment of a downlink slot in which a DCI corresponding to the PDCCH is located;

a TA of a TAG to which a serving cell of the terminal device belongs;

a time unit interval indicated by a DCI corresponding to the PDCCH; or

a duration of a time unit.

In some embodiments, the first moment is determined based on the first offset and at least one of: the second moment, TA/2, or a product of the time unit interval and the duration of the time unit.

In some embodiments, the first moment is determined based on:

subtracting the TA/2 from the second moment to obtain a result, adding the first offset, and then adding a product of the time unit interval and the duration of the time unit to the result.

In some embodiments, the first offset is determined based on a second offset configured by the network device for the terminal device.

In some embodiments, the first offset is determined based on a cell-level second offset.

In some embodiments, when the terminal device is not configured with a terminal device-specific second offset, the first offset is determined based on the cell-level second offset.

In some embodiments, the first offset is determined based on the cell-level second offset and a first value.

In some embodiments, the first offset is determined based on a product of the cell-level second offset and the first value.

In some embodiments, the first offset is determined based on the terminal device-specific second offset.

In some embodiments, the first offset is determined based on the terminal device-specific second offset and the first value.

In some embodiments, the first offset is determined based on the product of the terminal device-specific second offset and the first value.

In some embodiments, the first value is configured by the network device for the terminal device, or the first value is determined by the terminal device based on a pre-configuration, or the first value is agreed by a protocol, or the first value is predefined.

In some embodiments, the first offset is an offset configured by the network device for the terminal device.

In some embodiments, the first offset is carried in or indicated by at least one of: an SIB, an RRC signaling dedicated to the terminal device, an MAC CE, or the PDCCH.

In some embodiments, the first offset is predefined or is agreed by the protocol.

In some embodiments, the first offset is associated with a first cell type, the first cell type is included in one or more cell types, and different cell types of a plurality of cell types are associated with different offsets.

In some embodiments, the determination unit 701 is further configured to: determine, based on the first time interval, the starting time unit of the PUCCH transmission corresponding to the reception of the PSFCH.

In some embodiments, the PUCCH transmission includes transmission of HARQ feedback information on the PUCCH resource.

In some embodiments, the starting time unit of the PUCCH transmission is located after the first time interval after ending of the reception of the PSFCH.

In some embodiments, the starting time unit of the PUCCH transmission is determined based on a sum of an ending time unit of the reception of the PSFCH and the first time interval.

In some embodiments, the starting time unit of the PUCCH transmission is determined based on a sum of the ending time unit of the reception of the PSFCH, the first time interval and a second time interval.

The second time interval includes a time interval from a moment, as a starting moment, corresponding to a sum of the ending time unit of the reception of the PSFCH and the first time interval to a first or a latest available PUCCH resource.

In some embodiments, the first time interval is a minimum time unit interval between a transmission resource of the PSFCH and a transmission resource of the PUCCH, or the first time interval is determined based on a minimum time unit interval between a transmission resource of the PSFCH and a transmission resource of the PUCCH.

In some embodiments, the first time interval is determined by the terminal device based on a capability of the terminal device.

In some embodiments, the first time interval is configured by the network device for the terminal device.

In some embodiments, the first time interval is broadcast/multicast by the network device; or the first time interval is configured by the network device for the terminal device through a signaling dedicated to the terminal device.

In some embodiments, the first time interval is indicated in the DCI corresponding to the PDCCH.

In some embodiments, the first time interval is predefined or is agreed by a protocol.

In some embodiments, the communication unit 702 is further configured to: transmit a second time interval to a network device. The second time interval is determined by the terminal device based on a capability of the terminal device, and the second time interval is used for the terminal device and/or the network device to determine the first time interval.

In some embodiments, the first time interval is included in one or more time intervals configured by a higher layer.

It should be understood by a person of ordinary skill in the art that the relevant description of the above communication apparatuses in the embodiments of the disclosure may be understood with reference to the relevant description of the communication methods in the embodiments of the disclosure.

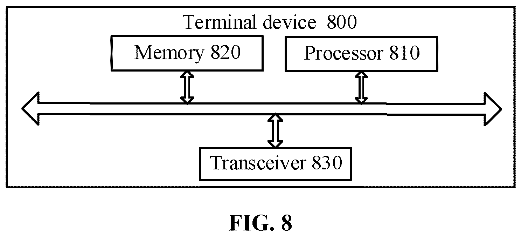

FIG. 8 is a schematic structural diagram of a terminal device provided in an embodiment of the present disclosure. As illustrated in FIG. 8, the terminal device 800 includes a processor 810 and a memory 820. The memory 820 is configured to store a computer program and the processor 810 is configured to call the computer program stored in the memory 820 and run the computer program, to enable the terminal device 800 to perform the method mentioned in any of the above embodiments.

Optionally, the memory 820 may be a separate device independent from the processor 810, or may be integrated in the processor 810.

In some embodiments, as illustrated in FIG. 8, the terminal device 800 may further include a transceiver 830. The processor 810 may control the transceiver 830 to communicate with other devices, specifically, to send information or data to other devices, or receive information or data from other devices.

The transceiver 830 may include a transmitter and a receiver. The transceiver 830 may further include an antenna, and there may be one or more antennas.

There is provided a computer storage medium in an embodiment of the present disclosure, the computer storage medium stores one or more programs executable by one or more processors that, when executing the one or more programs, perform the method for communication in any of the embodiments in the disclosure

In some embodiments, the computer-readable storage medium may be applied to the terminal device in the embodiments of the present disclosure, and the computer program, when being run on a computer, causes the computer to perform corresponding flows that are performed by the terminal device in various methods of the embodiments of the disclosure. For brevity, details are not elaborated herein again.

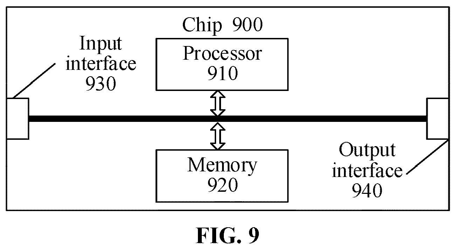

FIG. 9 is a schematic structural diagram of a chip of an embodiment of the disclosure. The chip 900 illustrated in FIG. 9 includes a processor 910. The processor 910 is configured to call a computer program stored in a memory and run the computer program to perform the method according to any of the embodiments of the present disclosure.

In some embodiments, as illustrated in FIG. 9, the chip 900 may further include a memory 920. The processor 910 may be configured to call the computer program stored in the memory 920 and run the computer program to perform the method according to the embodiments of the disclosure.

The memory 920 may be a separate device independent from the processor 910, or may be integrated into the processor 910.

In some embodiments, the chip 900 may further include an input interface 930. The processor 910 may control the input interface 930 to communicate with other devices or chips, specifically, to obtain information or data from other devices or chips.

In some embodiments, the chip 900 may further include an output interface 940. The processor 910 may control the output interface 940 to communicate with other devices or chips, specifically, to output information or data to other devices or chips.

In some embodiments, the chip may be applied to the terminal device in embodiments of the present disclosure. The chip may perform corresponding flows that are performed by the terminal device in various methods in the embodiments of the present disclosure. For brevity, details are not elaborated herein again.

It should be understood that, the chip mentioned in the embodiments of the present disclosure may also be referred to as a system-level chip, a system chip, a chip system or a chip of a system on chip, etc.

There is provided a computer program product in an embodiment of the present disclosure. The computer program product includes a computer storage medium storing a computer program. The computer program includes instructions executable by at least one processor that, when executing the instructions, perform the method for communication in any of the embodiments of the disclosure.

In some embodiments, the computer program product may be applied to a terminal device in the embodiments of the disclosure, and the computer program instructions, when being run on a computer, cause the computer to perform corresponding flows that are performed by the terminal device in various methods of the embodiments of the disclosure. For brevity, details are not described herein again.

Optionally, the computer program product in the embodiment of the disclosure may also be referred to as a software product in other embodiments.

There is provided a computer program in an embodiment of the present disclosure, the computer program causes a computer to perform the method for communication in any of the embodiments in the present disclosure.

In some embodiments, the computer program may be applied to the terminal device in the embodiments of the present disclosure, the computer program, when being run on a computer, causes the computer to perform corresponding flows that are performed by the terminal device in various methods of the embodiments of the present disclosure. For brevity, details are not elaborated herein again.

The processor, the communication apparatus, or the chip in the embodiments of the present disclosure may be an integrated circuit chip having a signal processing capability. During implementation, the steps of the foregoing method embodiments may be implemented by using an integrated logic circuit in hardware form in the processor or implemented by using instructions in a software form. The processor, the apparatus for communication, or the chip described above may include an integration of any one or more of: a general purpose processor, an application specific integrated circuit (ASIC), a digital signal processor (DSP), a digital signal processing device (DSPD), a programmable logic device (PLD), a field programmable gate array (FPGA), a central processing unit (CPU), a graphics processing unit (GPU), an embedded neural-network processing units (NPU), a controller, a microcontroller, a microprocessor, a programmable logic device, a discrete gate or a transistor logic device, or a discrete hardware component. The processor may be configured to implement or perform methods, steps and logical blocks disclosed in the embodiments of the present disclosure. The general-purpose processor may be a microprocessor or the processor may be any conventional processor and the like. Steps of the methods disclosed with reference to the embodiments of the disclosure may be directly executed and completed by means of a hardware decoding processor, or may be executed and completed by using a combination of hardware and software module in the decoding processor. The software module may be located in a mature storage medium in the field, such as a random access memory (RAM), a flash memory, a read-only memory (ROM), a programmable ROM (PROM), an electrically-erasable programmable memory, or a register. The storage medium is located in the memory, and the processor reads information in the memory and completes the steps in the foregoing methods in combination with hardware of the processor.

It can be understood that, the memory or the computer storage medium in the embodiments of the disclosure may be a volatile memory or a non-volatile memory, or may include both a volatile memory and a non-volatile memory. The non-volatile memory may be an ROM, a PROM, an erasable PROM (EPROM), an electrically EPROM (EEPROM) or a flash memory. The volatile memory may be an RAM and is used as an external cache. By way of illustration, but not limitation, many forms of RAMs may be used, for example, a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that, the memory in the system and method described herein aims to include but not be limited to these memories and any other suitable types of memories.

It should be understood that, the foregoing memory or the computer storage medium is exemplary but not limited description, for example, the memory in the embodiments of the disclosure may be an SRAM, a DRAM, an SDRAM, a DDR SDRAM, an ESDRAM, an SLDRAM and a DR RAM, etc. It should be noted that, the memory in the embodiments of the present disclosure aims to include but not be limited to these memories and any other suitable types of memories.

A person of ordinary skill in the art may be aware that, units and algorithm steps of various examples described in combination with the embodiments disclosed herein may be implemented by electronic hardware, or a combination of computer software and electronic hardware. Whether the functions are performed by hardware or software depends on particular applications and design constraint conditions of the technical solutions. Those skilled in the art may use different methods to implement the described functions for each particular application, and such implementations should not be considered to go beyond the scope of the present disclosure.

It may be clearly understood by those skilled in the art that, for the purpose of convenient and brief description, the detailed working process of the foregoing systems, apparatuses, and units may refer to the corresponding processes in the foregoing method embodiments, and details are not elaborated herein again.

In the several embodiments provided in this disclosure, it should be understood that the disclosed system, apparatus, and method may be implemented in other manners. For example, the described apparatus embodiments are merely exemplary. For example, the unit division is merely a logical function division and there may be other divisions in actual implementations. For example, multiple units or components may be combined or integrated into another system, or some features may be ignored or not performed. In addition, the displayed or discussed mutual coupling or direct coupling or communication connections may be an indirect coupling or communication connection implemented through some interfaces, apparatuses or units may be implemented in electrical, mechanical or other forms.

The units described as separate parts may be or may not be physically separate, and parts displayed as units may be or may not be physical units, they may be located in one place, or may be distributed on multiple network units. Some or all of the units may be selected according to actual needs to achieve the objectives of the solutions of the embodiments.

In addition, functional units in the embodiments of this disclosure may be integrated into one processing unit, or each of the units may exist physically and separately, or two or more units are integrated into one unit.

In any of the embodiments of the disclosure, a time interval, a time period, a time range, a duration, a time window, etc. may include all of the endpoint times, or may include part of the endpoint times (for example, including the left endpoint time but not including the right endpoint time, or including the right endpoint time but not including the left endpoint time), or may not include the endpoint time.

When the functions are implemented in form of a software functional module and sold or used as an independent product, the functions may be stored in a computer-readable storage medium. Based on such an understanding, the technical solutions of this application essentially, or the part contributing to the prior art, or part of the technical solutions may be embodied in the form of a software product. The computer software product is stored in a storage medium, and includes several instructions for instructing a computer device (which may be a personal computer, a server, a network device, and the like) to perform all or a part of the steps of the method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of this disclosure, but are not intended to limit the scope of protection of this disclosure. Any variation or replacement readily figured out by a person skilled in the art within the technical scope disclosed in this disclosure shall fall within the scope of protection of this disclosure. Therefore, the scope of protection of the present disclosure shall be subject to the scope of protection of the claims.

**Claims**

1. A communication method, comprising:
   determining, by a terminal device, a starting time unit of a sideline (SL) transmission and/or a starting time unit of a physical uplink control channel (PUCCH) transmission.

2. The method of claim 1, wherein a serving cell of the terminal device comprises a non-terrestrial network (NTN) cell.

3. The method of claim 1 or 2, wherein the terminal device is configured with an SL resource allocation mode 1, or a resource, of the terminal device, for the SL transmission is scheduled by a network device to the terminal device.

4. The method of any one of claims 1 to 3, wherein determining, by the terminal device, the starting time unit of the SL transmission comprises:
   determining, by the terminal device based on a first offset, the starting time unit of the SL transmission indicated/scheduled by a physical downlink control channel (PDCCH).

5. The method of claim 4, wherein determining, by the terminal device based on the first offset, the starting time unit of the SL transmission indicated/scheduled by the PDCCH comprises:
   determining, by the terminal device based on the first offset and a moment when the PDCCH is received, the starting time unit of the SL transmission indicated/scheduled by the PDCCH.

6. The method of claim 4 or 5, further comprising:
   receiving, by the terminal device, an SL dynamic scheduling grant indicated by the PDCCH; or receiving activation, indicated by the PDCCH, of an SL configured grant type 2; or receiving activation, indicated by the PDCCH, of the SL transmission grant indicated by the PDCCH.

7. The method of any one of claims 4 to 6, wherein the starting time unit of the SL transmission indicated/scheduled by the PDCCH is in a resource pool of the SL transmission and is not earlier than a first moment; and
wherein the first moment is determined based on the first offset.

8. The method of claim 7, wherein the first moment is determined based on the first offset and at least one of:

a second moment, comprising a starting moment of a downlink slot in which downlink control information (DCI) corresponding to the PDCCH is located;
a timing advance (TA) of a timing advance group (TAG) to which a serving cell of the terminal device belongs;
a time unit interval indicated by a DCI corresponding to the PDCCH; or
a duration of a time unit.

9. The method of claim 8, wherein the first moment is determined based on the first offset and at least one of: the second moment, TA/2, or a product of the time unit interval and the duration of the time unit.

10. The method of claim 8 or 9, wherein the first moment is determined based on:
subtracting the TA/2 from the second moment to obtain a result, adding the first offset, and then adding a product of the time unit interval and the duration of the time unit to the result.

11. The method of any one of claims 4 to 10, wherein the first offset is determined based on a second offset configured by a network device for the terminal device.

12. The method of any one of claims 4 to 11, wherein the first offset is determined based on a cell-level second offset.

13. The method of any one of claims 4 to 12, wherein when the terminal device is not configured with a terminal device-specific second offset, the first offset is determined based on a cell-level second offset.

14. The method of any one of claims 4 to 13, wherein the first offset is determined based on a cell-level second offset and a first value.

15. The method of any one of claims 4 to 14, wherein the first offset is determined based on a product of a cell-level second offset and a first value.

16. The method of any one of claims 4 to 11, wherein the first offset is determined based on a terminal device-specific second offset.

17. The method of any one of claims 4 to 11 and 16, wherein the first offset is determined based on a terminal device-specific second offset and a first value.

18. The method of any one of claims 4 to 11, 16 and 17, wherein the first offset is determined based on a product of a terminal device-specific second offset and a first value.

19. The method of any one of claims 14, 15, 17 and 18, wherein the first value is configured by a network device for the terminal device, or the first value is determined by the terminal device based on a pre-configuration, or the first value is agreed by a protocol, or the first value is predefined.

20. The method of any one of claims 4 to 11, wherein the first offset is an offset configured by a network device for the terminal device.

21. The method of claim 20, wherein the first offset is carried in or indicated by at least one of: a system information block (SIB), a radio resource control (RRC) signaling dedicated to the terminal device, a medium access control control unit (MAC CE), or the PDCCH.

22. The method of any one of claims 4 to 11, wherein the first offset is predefined or is agreed by a protocol.

23. The method of any one of claims 4 to 22, wherein the first offset is associated with a first cell type, the first cell type is comprised in one or more cell types, and different cell types of a plurality of cell types are associated with different offsets.

24. The method of any one of claims 1 to 23, wherein determining, by the terminal device, the starting time unit of the PUCCH transmission comprises:
determining, by the terminal device based on a first time interval, the starting time unit of the PUCCH transmission corresponding to a reception of a physical sideline feedback channel (PSFCH).

25. The method of claim 24, wherein the PUCCH transmission comprises a transmission of hybrid automatic repeat request (HARQ) feedback information on the PUCCH resource.

26. The method of claim 24 or 25, wherein the starting time unit of the PUCCH transmission is located after the first time interval after ending of the reception of the PSFCH.

**27.** The method of any one of claims 24 to 26, wherein the starting time unit of the PUCCH transmission is determined based on a sum of an ending time unit of the reception of the PSFCH and the first time interval.

**28.** The method of any one of claims 24 to 27, wherein the starting time unit of the PUCCH transmission is determined based on a sum of an ending time unit of the reception of the PSFCH, the first time interval and a second time interval; and
wherein the second time interval comprises a time interval from a moment, as a starting moment, corresponding to a sum of the ending time unit of the reception of the PSFCH and the first time interval, to a first or a latest available PUCCH resource.

**29.** The method of any one of claims 24 to 28, wherein the first time interval is a minimum time unit interval between a transmission resource of the PSFCH and a transmission resource of the PUCCH, or the first time interval is determined based on a minimum time unit interval between a transmission resource of the PSFCH and a transmission resource of the PUCCH.

**30.** The method of any one of claims 24 to 29, wherein the first time interval is determined by the terminal device based on a capability of the terminal device.

**31.** The method of any one of claims 24 to 29, wherein the first time interval is configured by a network device for the terminal device.

**32.** The method of claim 31, wherein the first time interval is broadcast/multicast by the network device; or the first time interval is configured by the network device for the terminal device through a signaling dedicated to the terminal device.

**33.** The method of claim 31, wherein the first time interval is indicated in a DCI corresponding to a PDCCH.

**34.** The method of any one of claims 24 to 29, wherein the first time interval is predefined or is agreed by a protocol.

**35.** The method of any one of claims 24 to 34, further comprising:
transmitting, by the terminal device, a second time interval to a network device, wherein the second time interval is determined by the terminal device based on a capability of the terminal device, and the second time interval is used for the terminal device and/or the network device to determine the first time interval.

**36.** The method of any one of claims 24 to 35, wherein the first time interval is comprised in one or more time intervals configured by a higher layer.

**37.** A communication apparatus, comprising a determination unit, configured to determine a starting time unit of a sideline (SL) transmission and/or a starting time unit of a physical uplink control channel (PUCCH) transmission.

**38.** A terminal device, comprising a processor and a memory, the memory being for storing a computer program, the processor being configured to call the computer program stored in the memory and run the computer program, to enable the terminal device to perform the method according to any one of claims 1 to 36.

**39.** A computer storage medium storing one or more programs that when executed by the one or more processors, implement the method of any one of claims 1 to 36.

**40.** A chip, comprising a processor configured to call a computer program from a memory and run the computer program, to perform the method of any one of claims 1 to 36.

**41.** A computer program product, comprising a computer storage medium storing a computer program, wherein the computer program comprises instructions executable by at least one processor that, when executing the instructions, perform the method of any one of claims 1 to 36.

**42.** A computer program, wherein the computer program for enabling a computer to perform the method according to any one of claims 1 to 36.

**FIG. 1**

**FIG. 2**

**FIG. 3**

**FIG. 4**

**FIG. 5**

A terminal device determines a starting time unit of an SL transmission and/or a starting time unit of a PUCCH transmission — S601

**FIG. 6**

Determination unit 701

Dommunication unit 702

Communication apparatus 700

**FIG. 7**

Terminal device  800

Memory 820

Processor 810

Transceiver 830

**FIG. 8**

**FIG. 9**

## INTERNATIONAL SEARCH REPORT

| International application No. |
|---|
| **PCT/CN2023/077967** |

| A. | CLASSIFICATION OF SUBJECT MATTER |
|---|---|

H04W72/0446(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, DWPI, ENTXT, VEN, CNTXT, ENTXTC: frame, NTN, PSFCH, PUCCH, sidelink, SL, slot, symbol, start+, offset, 侧链, 旁链, 边链, 帧, 时隙, 符号, 码元, 非地面网络, 起始, 开始, 偏移

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2022255680 A1 (ELECTRONICS AND TELECOMMUNICATIONS RESEARCH INSTITUTE) 11 August 2022 (2022-08-11)<br>description, paragraphs 81-112, and figures 4-5 | 1-42 |
| X | WO 2022085252 A1 (PANASONIC INTELLECTUAL PROPERTY CORPORATION OF AMERICA) 28 April 2022 (2022-04-28)<br>description, paragraphs 138-195 and 248-255 | 1-42 |
| A | CN 113785602 A (HUAWEI TECHNOLOGIES CO., LTD.) 10 December 2021 (2021-12-10)<br>entire document | 1-42 |
| A | WO 2022110233 A1 (GUANGDONG OPPO MOBILE TELECOMMUNICATIONS CORP., LTD.) 02 June 2022 (2022-06-02)<br>entire document | 1-42 |
| A | HUAWEI. ""Summary of [107-e-NR-5G_V2X-03]: Correction on processing time for simultaneous SL and UL transmissions/receptions""<br>*3GPP TSG RAN WG1 Meeting #107-e R1-2112879*, 23 November 2021 (2021-11-23),<br>entire document | 1-42 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2023** | **30 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/077967**

| Patent document cited in search report | | | Publication date (day/month/year) | Patent family member(s) | | | Publication date (day/month/year) |
|---|---|---|---|---|---|---|---|
| US | 2022255680 | A1 | 11 August 2022 | KR | 20200143271 | A | 23 December 2020 |
| | | | | EP | 3985900 | A1 | 20 April 2022 |
| | | | | WO | 2020251237 | A1 | 17 December 2020 |
| | | | | CN | 114051703 | A | 15 February 2022 |
| WO | 2022085252 | A1 | 28 April 2022 | CA | 3197761 | A1 | 28 April 2022 |
| | | | | CO | 2023004639 | A2 | 27 April 2023 |
| | | | | EP | 4236537 | A1 | 30 August 2023 |
| | | | | JPWO | 2022085252 | A1 | 28 April 2022 |
| | | | | KR | 20230092897 | A | 26 June 2023 |
| | | | | CN | 116326098 | A | 23 June 2023 |
| CN | 113785602 | A | 10 December 2021 | WO | 2021203440 | A1 | 14 October 2021 |
| | | | | TW | 202139636 | A | 16 October 2021 |
| | | | | KR | 20220160101 | A | 05 December 2022 |
| | | | | IN | 202237059854 | A | 27 January 2023 |
| | | | | US | 2023037805 | A1 | 09 February 2023 |
| | | | | EP | 4135363 | A1 | 15 February 2023 |
| | | | | JP | 2023521986 | A | 15 February 2023 |
| WO | 2022110233 | A1 | 02 June 2022 | EP | 4255081 | A1 | 04 October 2023 |
| | | | | US | 2023224933 | A1 | 13 July 2023 |

Form PCT/ISA/210 (patent family annex) (July 2022)